# EUROPÄISCHE PATENTSCHRIFT

(11) **EP 2 758 202 B1**
(45) Veröffentlichungstag und Bekanntmachung des Hinweises auf die Patenterteilung: **16.03.2016**
(21) Anmeldenummer: 12766299.7
(22) Anmeldetag: 17.09.2012
(51) Int. Cl.: B23D 77/02

(54) **REIBWERKZEUG UND VERFAHREN ZU DESSEN HERSTELLUNG**
REAMING TOOL AND METHOD FOR THE PRODUCTION THEREOF
OUTIL D'ALÉSAGE ET PROCÉDÉ POUR SA FABRICATION

(30) Priorität: 19.09.2011 DE 102011082979
(43) Veröffentlichungstag der Anmeldung: 30.07.2014
(73) Patentinhaber: Komet Group GmbH, 74354 Besigheim (DE)
(72) Erfinder: EIGENMANN, Roman, CH-4466 Ormalingen (CH); HODZA, Erkan, 71679 Asperg (DE); KRAMER, Niklas, 74321 Bietigheim-Bissingen (DE); SCHÜTT, Henry, 74343 Sachsenheim (DE)
(74) Vertreter: Pfiz, Thomas
(86) Internationale Anmeldenummer: PCT/EP2012/068227
(87) Internationale Veröffentlichungsnummer: WO 2013/041478

(56) Entgegenhaltungen:
- DE-A1- 4 320 511
- DE-A1- 4 405 750
- DE-A1-102005 005 213
- US-A1- 2001 037 609

## Beschreibung

Die Erfindung betrifft ein Reibwerkzeug gemäß dem Oberbegriff des Anspruchs 1 mit einem rotierend antreibbaren bzw. angetriebenen Grundkörper und mindestens einem an dem Grundkörper fixierten Schneidkörper, der mindestens eine Reibschneide am Rand einer Spanfläche aufweist. Die Erfindung betrifft weiter ein Verfahren gemäß dem Oberbegriff des Anspruchs 8 zur Herstellung derartiger Reibwerkzeuge.

Ein solches Reibwerkzeug und Verfahren sind aus der DE 102005005213 A1 bekannt.

Reiben ist ein spanabhebendes Bearbeitungsverfahren mit geometrisch bestimmter Schneide, wobei im Gegensatz zum Voll- oder Aufbohren nur mit kleinen Spanungsquerschnitten in stets vorbearbeiteten Bohrungen gearbeitet wird. Die abzuspanenden Aufmaße liegen typischerweise im Bereich 0,1 bis 0,5mm, bei einem Vorschub von typischerweise 0,05 bis 0,3 mm. Die Anforderungen bezüglich der Bauteilbearbeitung an ein Reibwerkzeug sind die Erzeugung einer hohen Maßgenauigkeit und -konstanz über viele Bauteile, die Erzielung einer hohen Oberflächenqualität, die Einhaltung einer genauen geometrischen Bohrungsform (z.B. Zylinder, Kegel) sowie die Erreichung einer hohen Wirtschaftlichkeit durch einen ungehinderten Bearbeitungsprozess, da Maschinenstillstandszeiten, z.B. zur Entsorgung von ungünstig geformten, den Gesamtprozess behindernden Spänen, äußerst negativ in die Bauteilwirtschaftlichkeitsrechnung eingehen.

Um die Maßgenauigkeit der Bohrung im Bereich weniger Mikrometer einzuhalten, werden Reibwerkzeuge individuell an die Bearbeitungsaufgabe angepasst. Diese Genauigkeit kann im Allgemeinen durch exakt definiertes Schleifen von fest mit dem Werkzeuggrundkörper verbundenen Schneidkörpern erreicht werden. Die weiteren Aufgaben bezüglich des eigentlichen Materialabtrages und der damit verbundenen Spanbildung werden im Wesentlichen der Spanfläche, angrenzend an die Schneidkante im Anschnittbereich, zugeschrieben.

Bei Reibwerkzeugen der eingangs genannten Art werden alle Funktionsflächen durch trennende Bearbeitungsverfahren hergestellt, auch die Spanflächen. Dies bedingt eine geometrische Einschränkung der möglichen Formen, was insbesondere im Spanflächenbereich besonders ins Gewicht fällt, weil dort kaum effektive Spanbrucheigenschaften realisiert werden können. Beschränkend sind hier die Geometrie und möglichen Verfahrwege der verwendeten Herstellungswerkzeuge in Bezug zu den am Grundkörper vormontierten Schneid körpern.

Ausgehend hiervon liegt der Erfindung die Aufgabe zugrunde, die im Stand der Technik bekannten Reibwerkzeuge und Verfahren zu deren Herstellung weiter zu verbessern und eine optimierte Spanbildung bei gleichzeitig hoher Qualität des Bearbeitungsergebnisses zu schaffen.

Zur Lösung dieser Aufgabe wird die in den unabhängigen Patentansprüchen angegebene Merkmalskombination vorgeschlagen. Vorteilhafte Ausgestaltungen und Weiterbildungen der Erfindung ergeben sich aus den abhängigen Ansprüchen.

Die Erfindung geht von dem Gedanken aus, die Spanflächentopologie und die Reibschneide durch unterschiedliche Formgebungsschritte zu erzeugen. Dementsprechend wird erfindungsgemäß vorgeschlagen, dass in der Spanfläche eine Spanformstufe und/oder Spanbruchelemente als Urformelemente eingeformt sind, und dass die Reibschneide zumindest abschnittsweise eine geschliffene Schneidkante aufweist. Durch Urformen kann die Spanfläche, insbesondere im Anschnittbereich unter Ausbildung einer Spanformstufe bzw. Spanbrechern so vorteilhaft gestaltet werden, dass die Spanbildung kontrolliert abläuft und die möglichst kurz brechenden Späne in die geeignete Richtung gelenkt werden, wo sie sicher von der erzeugten Bauteiloberfläche wegtransportiert werden können. Dies ist besonders wichtig bei Reiboperationen in Stahl, Aluminium und rostfreiem Stahl sowie allen weiteren Werkstoffen, die zu plastischer Verformung und somit lang ausgebildeten Spänen neigen. Mit den freiformmodellierbaren Spantopografien in Verbindung mit unter Materialabtrag geschliffenen Schneidengeometrien (Fase, Mehrfachfase, Radius, Fase und Radius etc.) können somit alle Anforderungen an Reibschneiden bzw. Reibwerkzeuge optimal erfüllt und signifikante Verbesserungen im Bereich der Spanformkontrolle erreicht werden.

Vorteilhafterweise ist der Schneidkörper als Urformteil, insbesondere als gesintertes Pressteil ausgebildet, um eine hohe geometrische Freiheit bezüglich der herstellbaren Spantopografien zu erzielen.

Um die Spanbildung, -formung und -bruch effektiv zu beeinflussen, ist es von Vorteil, wenn auf der Spanfläche insbesondere in einem Anschnittbereich der Reibschneide erhabene Spanbruchelemente angeordnet sind.

Dabei können die Spanbruchelemente weitgehend beliebige Formen eines geometrischen Körpers insbesondere als Ellipsoid, Kugel, Tonne, Zylinder, Würfel, Prisma, Pyramide, Kegel und deren Stümpfe besitzen.

Eine weitere Verbesserung lässt sich dadurch erreichen, dass eine Mehrzahl von Spanbruchelementen in einer oder mehreren Reihen gegebenenfalls mit reihenweise unterschiedlicher Höhe entlang mindestens eines Abschnitts der Reibschneide vorzugsweise parallel dazu angeordnet sind.

Bevorzugt sind die Spanbruchelemente im seitlichen Abstand vorzugsweise zwischen 0 und 2mm zu der Reibschneide angeordnet.

Durch die erfindungsgemäße Kombination der Formgebungsverfahren ist es auch möglich, dass die Spanfläche zumindest abschnittsweise einen positiven Spanwinkel vorzugsweise im Bereich von 5° bis 10° aufweist, dass die Reibschneide und die Spanformstufe ein voneinander abweichendes Höhenniveau besitzen, und dass die Spanfläche konvexe und/oder konkave und/oder unstetig verlaufende Oberflächenbereiche aufweist.

In verfahrensmäßiger Hinsicht wird die eingangs genannte Aufgabe dadurch gelöst, dass auf der Spanfläche eine Spanformstufe und/oder Spanbruchelemente als Urformelemente vorgeformt werden, und dass anschließend die Reibschneide zumindest abschnittsweise durch Materialabtrag, insbesondere Schleifen, Läppen, Polieren, Erodieren und Laserschneiden gebildet wird. Damit werden die vorstehend beschriebenen Vorteile für das Verfahrenserzeugnis in gleicher Weise erreicht.

Vorteilhafterweise wird die Reibschneide insbesondere in einem Anschnittbereich durch Fertigschleifen einer Freifläche oder einer Rundschlifffase des durch ein Urformverfahren vorgefertigten Schneidkörpers gebildet.

Im Zuge des Urformens kann der Schneidkörper vorzugsweise durch Pressen mit einer Funktionspartie zur Klemmung, Führung oder Befestigung an dem Grundkörper versehen werden.

Eine weitere vorteilhafte Ausführung sieht vor, dass der vorgefertigte Schneidkörper vor dem Aufbringen auf den Grundkörper mit einer Beschichtung versehen wird.

In einer vorteilhaften Verfahrensvariante wird der Schneidkörper als Vorformling fest auf den Grundkörper aufgebracht und sodann die Reibschneide am Werkzeug fertiggeschliffen.

Alternativ ist es auch möglich, dass die Reibschneide bei von dem Grundkörper getrenntem Schneidkörper fertiggeschliffen wird. In diesem Fall ist es günstig, wenn anschließend der Schneidkörper in seiner Orientierung verstellbar in einer Justiereinrichtung an dem Grundkörper montiert wird.

Im Folgenden wird die Erfindung anhand der in der Zeichnung schematisch dargestellten Ausführungsbeispiele näher erläutert. Es zeigen:
- Fig. 1: ein Reibwerkzeug mit einem Grundkörper und daran fixierten Schneidkörpern in perspektivischer Darstellung;
- Fig. 2: einen Schneidkörper des Reibwerkzeugs in perspektivischer Darstellung;
- Fig. 3: einen vergrößerten Ausschnitt der Fig. 2 im Bereich der Reibschneide des Reibwerkzeugs;
- Fig. 4: ein weiteres Ausführungsbeispiel eines Reibwerkzeugs in abgebrochener perspektivischer Darstellung;
- Fig. 5: einen vergrößerten Ausschnitt im Bereich V der Fig. 4.

Die in der Zeichnung dargestellten Reibwerkzeuge sind als drehend angetriebene modulare Werkzeuge an Werkzeugmaschinen für die Nachbearbeitung vorgefertigter Bohrungen zur Erzeugung qualitativ hochwertiger Innenflächen mit zylindrischer, kegeliger oder gestufter Form bestimmt. Zu diesem Zweck weisen die Reibwerkzeuge 10 einen über eine Kupplung 12 an eine Maschinenspindel lösbar anschließbaren, um seine Längsachse drehbaren Schaft 14, einen am vorderen Ende des Schafts 14 angeordneten Grundkörper 16 und eine Mehrzahl von in Umfangsrichtung verteilt an dem Grundkörper 16 fixierte Schneidkörper 18 auf.

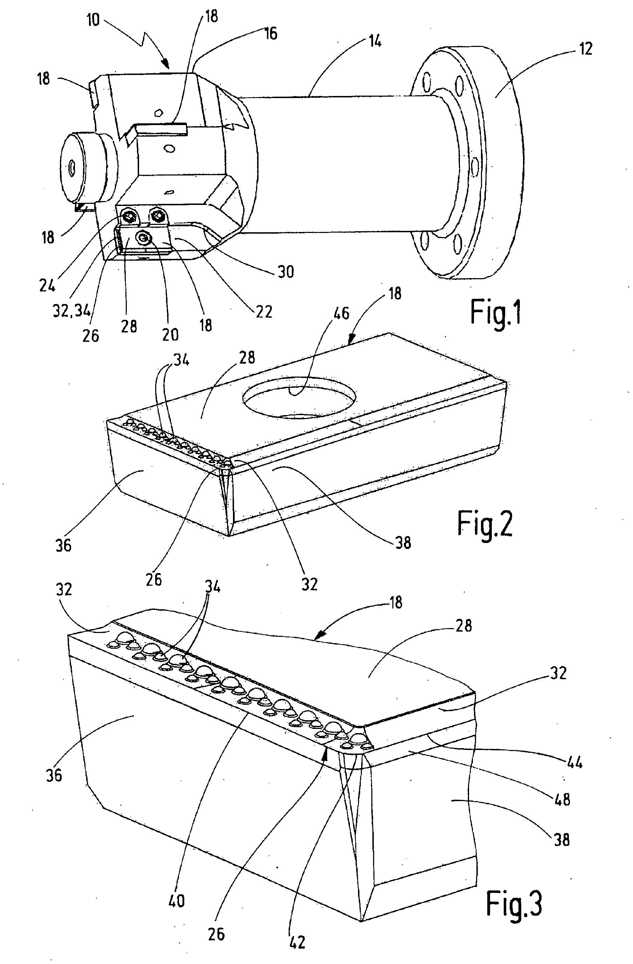

Bei der in Fig. 1 gezeigten Ausführungsform sind die plattenförmigen Schneidkörper 18 jeweils mit einer Klemmschraube 20 in einem Plattensitz 22 am Grundkörper 16 radial stehend fixiert. An jedem Plattensitz 22 befindet sich außerdem ein Verstellmechanismus 24 zur Feinverstellung der Schneidkörper 18. Damit lassen sich die Schneidkörper 18 so orientieren, dass sie mit ihrer Reibschneide 26 entsprechend der Bohrungsform und dem abzuspanenden Aufmaß - typischerweise 0,1 bis 0,5 mm - axial und/oder radial über den Grundkörper 16 überstehen. Die an die Reibschneide 26 anschließende Spanfläche 28 der Schneidkörper 18 sorgt dafür, dass die beim Reibvorgang entstehenden Späne in gewünschter Weise geformt bzw. gebrochen und über die Spanräume 30 im Grundkörper 16 abgeführt werden können. Hierfür ist in der Spanfläche 28 eine Spanformstufe 32 mit Spanbruchelementen 34 eingeformt.

Wie auch aus Fig. 2 und 3 ersichtlich, besitzt die an den seitlich angrenzenden Freiflächen 36, 38 angeschliffene Reibschneide 26 eine Stirnschneidkante 40, einen über Eck gehenden Anschnitt 42 und eine Nebenschneidkante 44. Der Anschnitt 42 sorgt dafür, das Reibwerkzeug 10 optimal in die vorbearbeitete Bohrung zu zentrieren und sicher anzuschneiden. Im Bereich des Anschnitts 42 und ggf. der Stirnschneidkante 40 findet auch die eigentliche Zerspanung statt. Die anschließende Nebenschneide 44 ist im Wesentlichen für die sichere Führung in der Bohrung und die Erzeugung einer guten Oberflächenqualität verantwortlich. Dabei ist die Führung und Glättung auf eine sehr geringe axiale Schrägstellung der Nebenschneide 44 mit nach hinten kleiner werdendem Flugkreisradius zurückzuführen (typischerweise 0 bis 100 µm Konizität auf 10 mm Länge). Die Führungsaufgabe kann auch durch räumlich von der Reibschneide 26 losgelöste, in den Grundkörper 16 oder die Schneidkörper 18 eingebrachte Führungsflächen übernommen werden.

Die durch die Reibschneide 26 begrenzte Spanformstufe 32 ist mit einer hohlkehligen Kontur in den Schneidkörper 18 eingeformt. Im Bereich der Stirnschneidkante 40 und des Anschnitts 42 sind in der Spanformstufe 32 erhabene Spanbruchelemente 34 in der Form von Kugelkalotten angeformt. Diese verlaufen in mehreren Reihen mit reihenweise unterschiedlicher Höhe im seitlichen Abstand zu der Reibschneide 26. Der Abstand variiert dabei zwischen 0 und etwa 2 mm. Als weitere Funktionspartie ist im Zentrum der Spanfläche 28 ein Durchbruch 46 für die Klemmschraube 20 ausgebildet.

In der gezeigten Ausführung ist der Freiwinkel durch die Schlifffase 48 an der Reibschneide 26 bestimmt. Im Bereich des Anschnitts 42 ist die Fase 48 mit einem Radius angeschliffen. Denkbar ist es auch, den Anschnitt 42 schräg über Eck anzufasen.

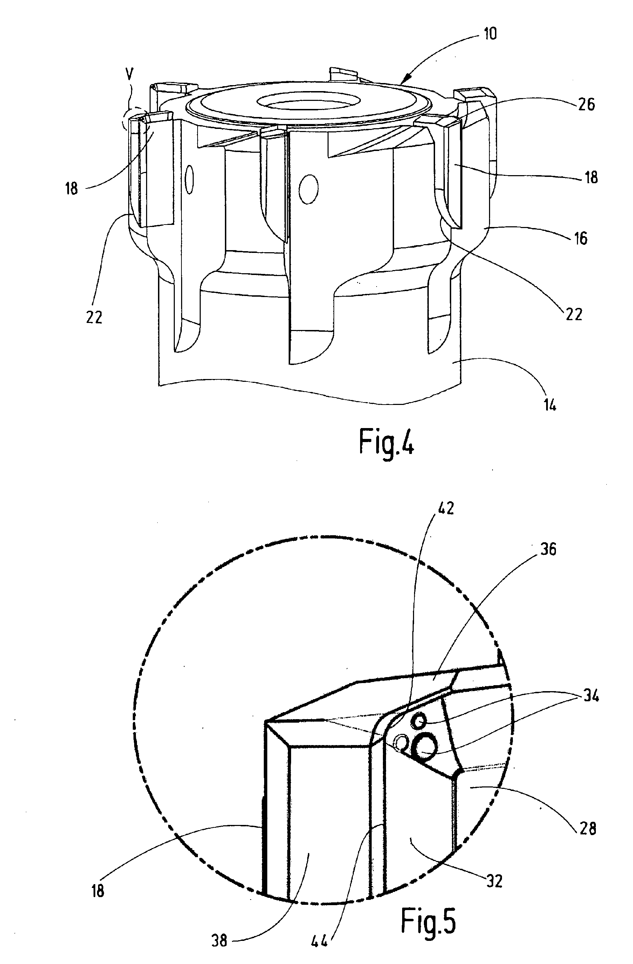

Fig. 4 zeigt eine weitere Ausführungsform eines modularen Reibwerkzeugs 10 mit Schaft 14, Grundkörper 16 und daran fixierten Schneidkörpern 18. Hier sind die Schneidkörper 18 fest in die Plattensitze 22 eingelötet, so dass das Fertigschleifen zur Herstellung einer an die gewünschte Bohrungsgeometrie angepassten Reibschneide 26 erst im eingebauten Zustand der Schneidkörper 18 erfolgen kann.

Fig. 5 zeigt einen vergrößerten Ausschnitt des Anschnittbereichs der Schneidkörper 18 in Fig. 4. Dabei sind gleiche oder ähnliche Teile mit denselben Bezugszeichen wie bei dem vorhergehend beschriebenen Ausführungsbeispiel versehen sind. Hier ist nur der Anschnitt 42 für die eigentliche Zerspanung vorgesehen, so dass auch nur in dem angrenzenden Bereich der Spanformstufe 32 die Spanbruchelemente 34 zur Beeinflussung der Spanbildung angeordnet sind.

Für die Herstellung der beschriebenen Reibwerkzeuge 10 werden zunächst die Schneidkörper 18 als Urformteile durch ein Urformverfahren gefertigt. Daraus ergibt sich eine hohe Gestaltungsfreiheit der möglichen geometrische Formen im Vergleich beispielsweise zu Trennverfahren, was insbesondere in der Spanflächentopografie ins Gewicht fällt, weil hier durch die Spanformstufe 32 bzw. Spanbruchelemente 34 effektive Spanbrucheigenschaften realisiert werden können. Besonders bevorzugt erfolgt eine pulvermetallurgische Herstellung von Rohlingen der Schneidkörper 18 durch Pressen und Sintern. Diese Rohlinge weisen im Bereich der Spanfläche 28 bereits die endgültige Geometrie auf, während im Bereich der Reibschneide 26 bzw. der Freiflächen 36, 38 ein Aufmaß für eine nachfolgende Schleifbearbeitung zur Verfügung gestellt wird.

In einer ersten Variante beispielsweise in der Ausführung nach Fig. 4 und 5 werden die Rohlinge mit gepresster Spantopografie ggf. nach Zwischenbearbeitungsschritten (Vorschleifen, Beschichten) durch Löten, Kleben etc. auf den am Schaft 14 angebrachten Grundkörper 16 unlösbar aufgebracht. Vorbereitend können die Plattensitze 22 am Grundkörper 16 feinbearbeitet werden, damit nur eine geringe Nachbearbeitung der darauf fixierten Schneidkörper 18 zur genauen Geometrieanpassung erforderlich ist und die Topologie in einem urformnahen Zustand erhalten bleibt.

Anschließend wird in fester Orientierung zum Grundkörper 16 die Reibschneide 26 durch exakt definiertes Fertigschleifen der Freiflächen 36, 38 bzw. von Führungsflächen (Rundschliffasen) erzeugt. Dabei kommt es einerseits auf eine hochpräzise Einhaltung des gewünschten Durchmessers und andererseits auf extrem hohe Oberflächenqualität der geschliffenen Flächen an, weil dadurch sowohl die Schartigkeit der Schneidkante als auch die Reibverhältnisse auf den Führungsflächen bestimmt werden. Dies geht direkt in die Qualität des Bearbeitungsergebnisses ein. Nur eine spezifische Kombination aus Anschnittgeometrie und Führung mit angepasster Konizität gepaart mit geeigneten Schneidstoffen und gegebenenfalls Beschichtungen garantiert das Erreichen der geforderten Qualitäten.

In einer weiteren Variante werden die pulvermetallurgisch hergestellten Rohlinge der Schneidkörper 18 mit Spantopografie getrennt vom Grundkörper 16 fertiggeschliffen. Anschließend werden die fertigen Schneidkörper 16 an dem Grundkörper 16 beispielsweise mittels Klemmschraube 20 montiert. In diesem Fall ist ein in Durchmesser und Konizität einstellbarer Verstellmechanismus 24 notwendig, wie er beispielhaft in Fig. 1 gezeigt ist. Aus der dieser Variante entstehen zusätzlich z.B. folgende Möglichkeiten für ein modular gefügtes Reibwerkzeug:
- CVD-Beschichtung (auch Diamant), was ansonsten im Bereich gefügter Werkzeuge aufgrund der Beschichtungstemperaturen ausscheidet;
- Schneidelemente aus nicht/schlecht/aufwändig lötbaren Schneidstoffen (Cermets, Keramik, CVD-Diamant, etc.).

Allgemein lassen sich durch eine gepresste Spanflächentopografie in Verbindung mit einer durch Schleifen angepassten Reibschneide folgende besondere Merkmale an Reibwerkzeugen realisieren:
- positiver Spanwinkel entlang der kompletten Schneidkante bzw. Anschnittgeometrie;
- konvexe und konkave Formen und Geometrieelemente auf der Spanfläche;
- in ihrem Verlauf unstetige Formen wie Absätze, Kanten und Vertiefungen;
- unterschiedliche Höhenniveaus von Schneidkante und Spanformstufe (Höcker);
- Spanwinkel von 0° bis 25° (bevorzugt 5° bis 10°);
- Schneidkante gleichhoch, tiefer oder höher als die obere Deckfläche des Schneidkörpers;
- eine oder mehrere Reihen von Spanbruchelementen mit unterschiedlicher Höhe in hintereinander folgenden Reihen bzw. innerhalb einer Reihe (bevorzugt bei Stirnschnittbearbeitung);
- Kombination aus zueinander versetzten und nicht versetzten Reihen von Spanbruchelementen;
- exakte Positionierung der Spanbruchelemente zur Spanablaufrichtung;
- definierter Winkel von Ein- und Auslauf der Spanbruchelemente relativ zum Spanwinkel;
- definierter Abstand Spanbruchelemente zur Schneidkante (bspw. im Bereich zwischen 0 und 2 mm);
- durch Pressen geformte Geometrie zur Klemmung, Führung, Befestigung der Schneidkörper, wie z.B. Klemmschraubenbohrungsgeometrien, Führungen, Verzahnungen, Klemmpratzeneingriffe;
- Konturen zum Durch- oder Umleiten von Kühlschmierstoffmedien.

## Patentansprüche

1. Reibwerkzeug mit einem rotierend antreibbaren Grundkörper (16) und mindestens einem daran fixierten Schneidkörper (18), der als Urformteil ausgebildet ist und mindestens eine Reibschneide (26) am Rand einer Spanfläche (28) aufweist, wobei die Reibschneide (26) eine geschliffene Schneidkante (40,42,44) aufweist, **dadurch gekennzeichnet, dass** die Spanfläche (28) einen positiven Spanwinkel im Bereich von 5° bis 10° aufweist, und dass in der Spanfläche (28) erhabene Spanbruchelemente (34) als Urformelemente eingeformt sind.

2. Reibwerkzeug nach Anspruch 1, **dadurch gekennzeichnet, dass** der Schneidkörper (18) als gesintertes Pressteil ausgebildet ist.

3. Reibwerkzeug nach Anspruch 1 oder 2, **dadurch gekennzeichnet, dass** auf der Spanfläche (28) in einem Anschnittbereich (42) der Reibschneide (26) erhabene Spanbruchelemente (34) angeordnet sind.

4. Reibwerkzeug nach einem der Ansprüche 1 bis 3, **dadurch gekennzeichnet, dass** die Spanbruchelemente (34) die Form eines geometrischen Körpers insbesondere als Ellipsoid, Kugel, Tonne, Zylinder, Würfel, Prisma, Pyramide, Kegel und deren Stümpfe besitzen.

5. Reibwerkzeug nach einem der Ansprüche 1 bis 4, **dadurch gekennzeichnet, dass** eine Mehrzahl von Spanbruchelementen (34) in einer oder mehreren Reihen gegebenenfalls mit reihenweise unterschiedlicher Höhe entlang mindestens eines Abschnitts der Reibschneide (26) vorzugsweise parallel dazu angeordnet sind.

6. Reibwerkzeug nach einem der Ansprüche 1 bis 5, **dadurch gekennzeichnet, dass** die Spanbruchelemente (34) im seitlichen Abstand vorzugsweise zwischen 0 und 2mm zu der Reibschneide (26) angeordnet sind.

7. Reibwerkzeug nach einem der Ansprüche 1 bis 6, **dadurch gekennzeichnet, dass** die Spanfläche (28) konvexe und/oder konkave und/oder unstetig verlaufende Oberflächenbereiche aufweist.

8. Verfahren zur Erstellung eines Reibwerkzeugs (10) nach einem der vorhergehenden Ansprüche, bei dem an einem rotierend antreibbaren Grundkörper (16) mindestens ein Schneidkörper (18) angebracht wird und mindestens eine Reibschneide (26) am Rand einer Spanfläche (28) des Schneidkörper (18) gebildet wird, **dadurch gekennzeichnet, dass** auf der einen positiven Spanwinkel im Bereich von 5° bis 10° aufweisenden Spanfläche (28) erhabene Spanbruchelemente (34) als Urformelemente vorgeformt werden, und dass anschließend die Reibschneide (26) zumindest abschnittsweise durch Materialabtrag gebildet wird.

9. Verfahren nach Anspruch 8, **dadurch gekennzeichnet, dass** die Reibschneide (26) insbesondere in einem Anschnittbereich (42) durch Fertigschleifen einer Freifläche (36,38) oder einer Rundschlifffase des durch ein Urformverfahren vorgefertigten Schneidkörpers (18) gebildet wird.

10. Verfahren nach Anspruch 8 oder 9, **dadurch gekennzeichnet, dass** der Schneidkörper (18) vorzugsweise durch Pressen mit einer Funktionspartie (46) zur Klemmung, Führung oder Befestigung an dem Grundkörper (16) versehen wird.

11. Verfahren nach einem der Ansprüche 8 bis 10, **dadurch gekennzeichnet, dass** der vorgefertigte Schneidkörper (18) vor dem Aufbringen auf den Grundkörper (16) mit einer Beschichtung versehen wird.

12. Verfahren nach einem der Ansprüche 8 bis 11, **dadurch gekennzeichnet, dass** der Schneidkörper (18) als Vorformling fest auf den Grundkörper (16) aufgebracht wird, und dass sodann die Reibschneide (26) fertiggeschliffen wird.

13. Verfahren nach einem der Ansprüche 8 bis 11, **dadurch gekennzeichnet, dass** die Reibschneide (26) bei von dem Grundkörper (16) getrenntem Schneidkörper (18) fertiggeschliffen wird, und dass anschließend der Schneidkörper (18) in seiner Orientierung verstellbar an dem Grundkörper (16) montiert wird.

## Claims

1. A reaming tool, having a rotationally drivable main body (16) and at least one cutting body (18) fixed thereto that is configured as a primary shaping part and has at least one reaming cutter (26) on the edge of a rake face (28), wherein the reaming cutter (26) has a ground cutting edge (40, 42, 44) **characterized in that** the rake face (28) has a positive rake angle in the range from 5° to 10° and that raised chip-breaking elements (34) are formed in the rake face (28) as primary shaping parts.

2. The reaming tool as claimed in claim 1, **characterized in that** the cutting body (18) is configured as a sintered pressed part.

3. The reaming tool as claimed in claim 1 or 2, **characterized in that** raised chip-breaking elements (34) are arranged on the rake face (28)in a taper lead region (42) of the reaming cutter (26).

4. The reaming tool as claimed in one of claims 1 to 3, **characterized in that** the chip-breaking elements (34) have the shape of a geometric body, in particular as an ellipsoid, sphere, barrel, cylinder, cube, prism, pyramid, cone, and frustums thereof.

5. The reaming tool as claimed in one of claims 1 to 4, **characterized in that** a plurality of chip-breaking elements (34) are arranged in one or more rows, where necessary with, row by row, different height along at least one portion of the reaming cutter (26), preferably parallel thereto.

6. The reaming tool as claimed in one of claims 1 to 5, **characterized in that** the chip-breaking elements (34) are arranged at a lateral distance, preferably between 0 and 2 mm, to the reaming cutter (26).

7. The reaming tool as claimed in one of claims 1 to 6, **characterized in that** the rake face (28) has convex and/or concave and/or erratically running surface regions.

8. A method for producing a reaming tool (10), in particular as claimed in one of the preceding claims, in which method at least one cutting body (18) is attached to a rotationally drivable main body (16), and at least one reaming cutter (26) is formed on the edge of a rake face (28) of the cutting body (18), **characterized in that** raised chip-breaking elements (34) are preformed as primary shaping elements on the rake face (28) which has a positive rake angle in the range from 5° to 10°, and **in that** subsequently the reaming cutter (26) is formed at least in some sections by material removal.

9. The method as claimed in claim 8, **characterized in that** the reaming cutter (26) is formed, in particular in a taper lead region (42), by finish-grinding of a flank (36, 38) or of a circularly ground chamfer of the cutting body (18) preproduced by a primary shaping process.

10. The method as claimed in claim 8 or 9, **characterized in that** the cutting body (18) is provided, preferably by pressing, with a functional section (46) for clamping, guidance or fastening to the main body (16).

11. The method as claimed in one of claims 8 to 10, **characterized in that** the preproduced cutting body (18) is provided with a coating prior to application to the main body (16).

12. The method as claimed in one of claims 8 to 11, **characterized in that** the cutting body (18) is applied as a preform fixedly to the main body (16), and **in that** the reaming cutter (26) is then finish-ground.

13. The method as claimed in one of claims 8 to 11, **characterized in that** the reaming cutter (26), if the cutting body (18) is separate from the main body (16), is finish-ground, and **in that** subsequently the cutting body (18) is mounted on the main body (16) such that it is adjustable in its orientation.

## Revendications

1. Outil d'alésage comprenant un corps de base (16) apte à être entraîné en rotation et au moins un corps de coupe (18) fixé sur celui-ci, réalisé sous la forme d'une pièce de formage primaire et présentant au moins un tranchant d'alésage (26) sur le bord d'une face de coupe (28), le tranchant d'alésage (26) présentant une arête de coupe polie (40, 42, 44), **caractérisé en ce que** ladite face de coupe (28) présente un angle de coupe positif compris entre 5° et 10°, et **en ce que** des éléments brise-copeaux (34) en relief en tant qu'éléments de formage primaire sont formés dans la face de coupe (28).

2. Outil d'alésage selon la revendication 1, **caractérisé en ce que** le corps de coupe (18) est réalisé sous la forme d'une pièce moulée frittée.

3. Outil d'alésage selon la revendication 1 ou 2, **caractérisé en ce que** les éléments brise-copeaux (34) en relief sont disposés sur la face de coupe (28) dans une zone d'attaque (42) du tranchant d'alésage (26).

4. Outil d'alésage selon l'une des revendications 1 à 3, **caractérisé en ce que** les éléments brise-copeaux (34) possèdent la forme d'un corps géométrique, en particulier ellipsoïde, sphère, tonneau, cylindre, cube, prisme, pyramide, cône et leurs troncs.

5. Outil d'alésage selon l'une des revendications 1 à 4, **caractérisé en ce qu'**une pluralité d'éléments brise-copeaux (34) sont disposés en une ou plusieurs rangées, le cas échéant à hauteur différente par rangée, le long d'au moins une portion du tranchant d'alésage (26), de préférence parallèlement à celui-ci.

6. Outil d'alésage selon l'une des revendications 1 à 5, **caractérisé en ce que** les éléments brise-copeaux (34) sont disposés à une distance latérale de préférence comprise entre 0 et 2mm du tranchant d'alésage (26).

7. Outil d'alésage selon l'une des revendications 1 à 6, **caractérisé en ce que** la face de coupe (28) présente des parties de surface convexes et/ou concaves et/ou s'étendant de façon discontinue.

8. Procédé de fabrication d'un outil d'alésage (10) selon une des revendications précédentes, dans lequel au moins un corps de coupe (18) est fixé sur un corps de base (16) apte à être entraîné en rotation et au moins un tranchant d'alésage (26) est formé sur le bord d'une face de coupe (28) du corps de coupe (18), **caractérisé en ce que** des éléments brise-copeaux (34) en relief en tant qu'éléments de formage primaire sont préformés sur ladite face de coupe (28) présentant un angle de coupe positif compris entre 5° et 10°, et **en ce qu'**ensuite le tranchant d'alésage (26) est formé au moins par endroits par enlèvement de matière.

9. Procédé selon la revendication 8, **caractérisé en ce que** le tranchant d'alésage (26), notamment dans une zone d'attaque (42), est formé par un meulage de finition d'une face de dépouille (36, 38) ou d'un chanfrein de rectification cylindrique du corps de coupe (18) préfabriqué par un procédé de formage primaire.

10. Procédé selon la revendication 8 ou 9, **caractérisé en ce que** le corps de coupe (18) est muni d'une partie fonctionnelle (46), de préférence par moulage, pour assurer le serrage, le guidage ou la fixation sur le corps de base (16).

11. Procédé selon l'une des revendications 8 à 10, **caractérisé en ce que** le corps de coupe (18) préfabriqué est muni d'un revêtement avant le montage sur le corps de base (16).

12. Procédé selon l'une des revendications 8 à 11, **caractérisé en ce que** le corps de coupe (18) en tant qu'ébauche est monté de manière fixe sur le corps de base (16), et **en ce qu'**il est procédé ensuite au meulage de finition du tranchant d'alésage (26).

13. Procédé selon l'une des revendications 8 à 11, **caractérisé en ce qu'**il est procédé au meulage de finition du tranchant d'alésage (26) lorsque le corps de coupe (18) est séparé du corps de base (16), et **en ce qu'**ensuite le corps de coupe (18) est monté de façon réglable en orientation sur le corps de base (16).
